# EUROPÄISCHE PATENTANMELDUNG

(11) **EP 0 989 639 A2**
(43) Veröffentlichungstag der Anmeldung: **29.03.2000**
(21) Anmeldenummer: 99118705.5
(22) Anmeldetag: 22.09.1999
(51) Int. Cl.: H01S 3/0933

(54) **LED-Gepumpter Hochleistungslaser**

(30) Priorität: 23.09.1998 DE 19843752
(71) Anmelder: Langner, Walter, 82319 Starnberg (DE)
(72) Erfinder: Langner, Walter, 82319 Starnberg (DE)
(74) Vertreter: Zipse + Habersack

(57) **Zusammenfassung**

Die Erfindung betrifft einen Hochleistungslaser (10) für hohe Leistungen > 1 W bis in den kW-Bereich mit einer Pumpquelle (14) und einem aktiven Lasermaterial (18), wobei die Pumpquelle (14) des Lasers durch mindestens eine LED (16) gebildet ist.

Entweder ist eine Steuerung für einen Impulsbetrieb der Leuchtdiode vorgesehen, die während des Betriebszyklus der LED (16) zum Zuführen eines Vielfachen des maximalen Nennstroms der LED ausgebildet ist, und/oder im optischen Resonator ist ein optischer Schalter (34) angeordnet und es ist eine Steuerung (36) vorgesehen, die den optischen Schalter (34) zur Abgabe eines Laserimpulses während eines Betriebszyklus < 50% öffnet.

## Beschreibung

Die Erfindung betrifft einen Hochleistungslaser mit einer Pumpquelle und einem aktiven Lasermaterial, das durch die Pumpquelle zur Erzeugung eines Laserstrahls aktiviert wird.

Als Hochleistungslaser werden nachfolgend Laser, insb. Festkörperlaser mit einer Ausgangsleistung von 1 W, vorzugsweise 10 W bis in den kW-Bereich bezeichnet. Bislang werden zur Erzeugung von Laserstrahlen in Festkörperlasern Vorrichtungen verwendet, die mittels Gasentladungslampen oder Laserdioden gepumpt werden. Laserdioden erzeugen die Strahlung durch stimulierte Emission. Die emittierte Strahlung ist äußerst schmalbandig und daher zum Anregen eines aktiven Materials sehr gut geeignet. Die Laserdioden haben darüber hinaus einen relativ hohen Wirkungsgrad von etwa 50%. Ein Nachteil der Laserdiode besteht darin, daß sie an ihrer Leistungsgrenze betrieben wird. Eine auch nur äußerst kurzzeitige Erhöhung des Stroms über den maximal zulässigen Grenzwert Iₘₐₓ führt zu einer spontanen Zerstörung der optisch wirksamen Oberflächen der Laserdiode. Wenn somit, z.B. beim Einschalten elektrischer Geräte, eine kurzzeitige Spannungsspitze in der Stromversorgung auftritt, ist aufgrund der mit der Spannungsspitze verbundenen Stromerhöhung die Laserdiode zerstört. Daneben bewirkt der Betrieb im Grenzbereich mit sehr hohen Stromdichten Materialdiffusionen, die die Lebenserwartung der Laserdioden auf einen relativ geringen Zeitraum von üblicherweise einigen tausend Stunden begrenzt. Darüber hinaus ist - ausgehend von dem kontinuierlichen Betrieb bereits knapp unterhalb des Grenzbereichs der Diodenkennlinie kein Impulsbetrieb möglich, sowie aufgrund der hohen Stromdichte die Lebensdauer unbefriedigend kurz.

Die Verwendung von LED für Laser ist aus der DE 25 42 652 bekannt. Die LED werden dort jedoch für Laser mit geringen Leistungen verwendet. Eine Verwendung der LED für Hochleistungslaser wurde aufgrund der Leistungscharakteristika von LEDs bislang für technisch nicht sinnvoll gehalten.

Es ist demnach Aufgabe der Erfindung, einen Hochleistungslaser zu schaffen, der eine lange Lebensdauer aufweist.

Diese Aufgabe wird erfindungsgemäß durch einen Laser gemäß Anspruch 1 gelöst. Vorteilhafte Weiterbildungen der Erfindung sind Gegenstand der zugeordneten Unteransprüche. Ein Verfahren zum Betreiben eines Hochleistungslasers ist Gegenstand der Ansprüche 6 und 8.

Erfindungsgemäß wird als Pumpquelle des Hochleistungslasers wenigstens eine Leuchtdiode verwendet, was angesichts der Leistungscharakteristika einer LED für Hochleistungsanwendungen absolut ungewöhnlich ist.

Leuchtdioden unterscheiden sich primär von Laserdioden dadurch, daß sie spontan emittieren. Die Emission wird also nicht, wie bei der Laserdiode optisch angeregt (stimuliert), was bei der Laserdiode zu einer hohen Lichtausbeute in einer diskreten Wellenlänge führt. Bei der LED findet die Rekombination der Ladungsträger nur spontan über dritte Partner wie Phononen oder Störstellen statt. Nachteil der spontanen Emission ist die Tatsache, daß die bei der Rekombination der Ladungsträger abgegebene Strahlung aufgrund der unterschiedlichen Auslöser für die spontane Emission - wie z.B. verschiedene Energieniveaus der Störstellen - keine diskrete Wellenlänge aufweist, vielmehr eine Abstrahlung in einem gewissen Wellenlängenbereich erfolgt.

Die Lösung der Erfindung ist somit für den Fachmann überraschend, da eine Leuchtdiode - wie oben beschrieben - deutlich breitbandiger emittiert als eine Laserdiode und somit als Pumpquelle auf den ersten Blick gar nicht so gut geeignet ist und der Wirkungsgrad einer Leuchtdiode mit heutzutage maximal 20% immer noch deutlich unter dem Wirkungsgrad von Laserdioden liegt.

Die vorliegende Erfindung erachtet dennoch die Verwendung von Leuchtdioden zum Pumpen des optischen Materials in einer Laservorrichtung als äußerst vorteilhafte Maßnahme.

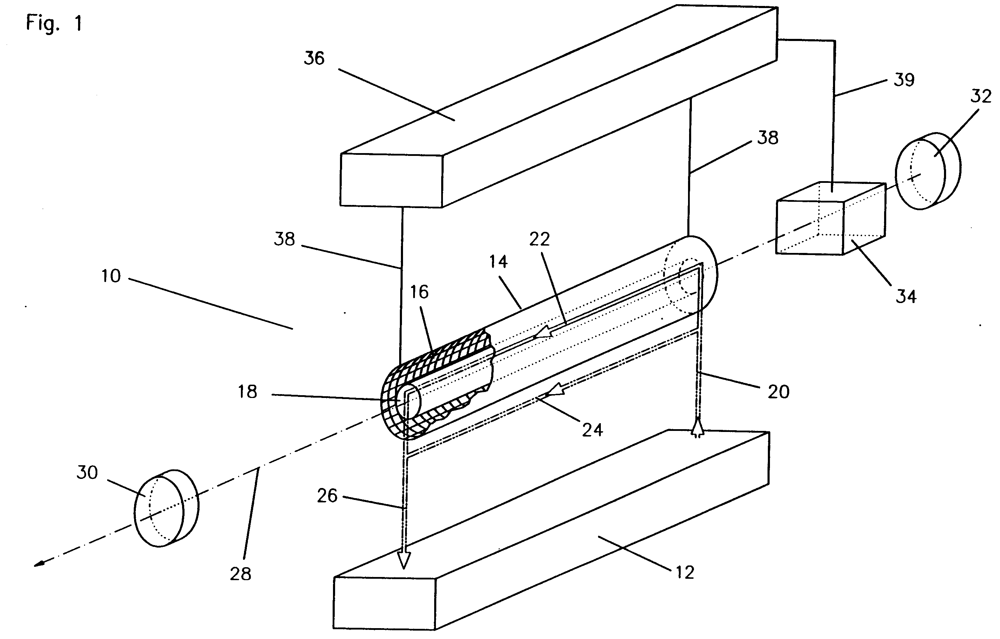

Dies wird anhand der Laserkennlinie für eine LED bzw. IRED gemäß Fig. 1 erläutert. Die Laserkennlinie gibt die Lichtausbeute (Ordinate) in Abhängigkeit von der Stromstärke (Abszisse) wieder. Man erkennt einen Bereich der spontanen Emission, in welchem mit zunehmendem Strom nur eine relativ geringe Erhöhung der Lichtausbeute einhergeht. Dieser Bereich geht an einem Punkt Iₜₕ in einen sehr steilen Bereich über, in dem stimulierte Emission vorherrscht. Die spontan emittierende Leuchtdiode wird in einem Bereich unterhalb des als Schwellenstrom Iₜₕ bezeichneten Knickpunktes betrieben. Bei der Laserdiode hingegen geht die ebenfalls auftretende spontane Emission in die stimulierte Emission über. Die emittierte Strahlungsleistung steigt hier linear an. Die Laserdiode arbeitet hier jedoch an einem Arbeitspunkt, bei der eine geringfügige Stromerhöhung mit einer Zerstörung der optischen Flächen einhergeht und die Stromdichten im Bauteil zu Materialdiffusionen führen, die die Lebensdauer stark einschränken.

Der herkömmliche Betriebspunkt der Leuchtdiode liegt üblicherweise deutlich unterhalb des maximal zulässigen Stroms, der die thermische Grenze für den Betrieb der Leuchtdiode darstellt. Die Leuchtdiode kann daher gepulst betrieben werden, wobei kurzzeitig für den Bereich von bis zu Millisekunden die zulässige Stromstärke deutlich überschritten werden darf. Dies hat seine Ursache darin, daß die Leuchtdiode keine optisch leicht zerstörbaren Flächen wie die Laserdiode aufweist sondern in erster Linie nur thermisch zerstört werden kann, was allerdings, wie bei allen thermischen Vorgängen erst eine gewisse Dauer des Betriebs oberhalb des Grenzpunktes voraussetzt. Es ist daher bei der LED wesentlich, daß das zeitliche Mittel des Stromflusses den Grenzwert nicht überschreitet.

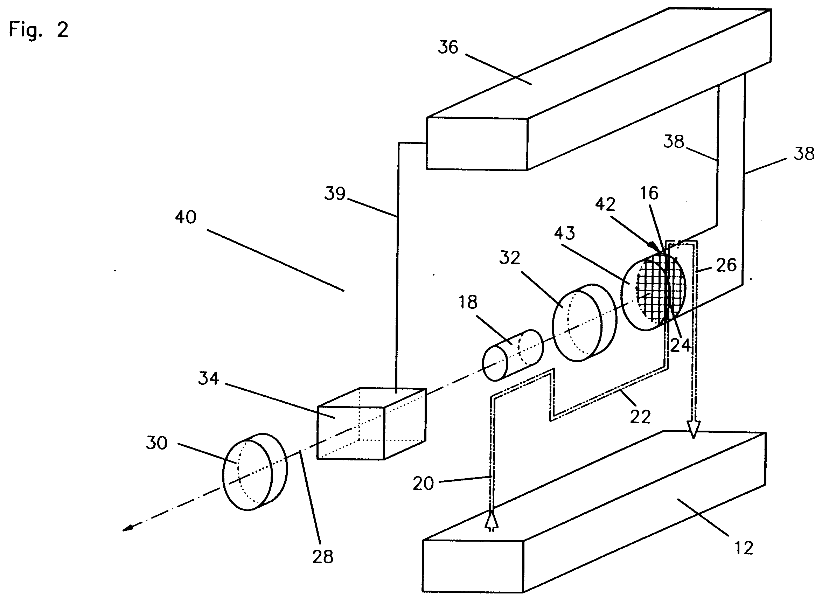

Daher ist es möglich, die Leuchtdiode mit Pulsüberhöhungen um den Faktor 4 bis 10.000, insbesondere um den Faktor 50 bis 5.000 zu betreiben. Die Pulsüberhöhung beschreibt das Verhältnis der Stromzufuhr bzw. Leistung bei der Impulsspitze zum Maximalstrom im Dauerbetrieb, bzw. der maximal zulässigen Dauerleistung, die durch die thermische Belastbarkeit der LED definiert ist. Es wurde herausgefunden, daß es möglich ist, die LED pulsüberhöht zu betreiben, solange der zeitliche Mittelwert der Leistung diesen Wert der maximal zulässigen Dauerleistung nicht überschreitet. Dies ist mit einer Laserdiode nicht möglich, weil ein derartiger gepulster Betrieb sofort mit einer Zerstörung der optischen Flächen verbunden wäre. Die Abhängigkeit der Pulsüberhöhung vom Betriebszyklus ist in Fig. 2 wiedergegeben. Dort zeigt die Abszisse "Duty Cycle" den Betriebszyklus, d.h. die Dauer der Betriebszeit relativ zur Pausenzeit in logarithmischer Darstellung. Die Ordinate zeigt den Stromfluß "Peak Forward Current" (in mA), ebenfalls in logarithmischer Darstellung. Die unterschiedlichen Kurven stellen den Betrieb bei unterschiedlichen Pulsdauern dar. Während somit bei einem kontinuierlichen Betrieb, d.h. 100% Duty Cycle, der zulässige Stromfluß etwa 0,5 mA beträgt, steigt er bei einer Pulslänge von 10 µs Dauer und einer relativen Betriebsdauer von 0,5 % auf 10 mA, d.h. etwa um Faktor 20. Durch extrem kurze Ansteuerung mit großen Pausenzeiten lassen sich durch Pulsüberhöhungen Leistungen realisieren, die die maximale Dauerleistung der Diode um Zehnerpotenzen übersteigen, ohne die LED thermisch zu zerstören.

Zusätzlich läßt sich durch aktive Kühlung der LED die Strahlungsausbeute abermals erhöhen. Dies wird in der Regel nicht angewandt, da bei derzeitigen LED-Applikationen die Diode thermisch nicht so leicht zerstört werden kann. Deshalb kann die LED zum Pumpen von Lasern vorzugsweise in einem Kühlmittelkreislauf , z.B. in einem Kühlgasstrom oder Fluid, z.B. Wasser angeordnet werden. Eine sehr stabile Anordnung läßt sich erzielen, wenn die LED mit dem Kühlmittelkreislauf in einem monolithischen Gehäuse angeordnet ist. Die Wärme kann über einen an dem Gehäuse integriert ausgebildeten Kühlkörper gleich an die Umgebung abgegeben werden. Es ist jedoch auch ein Anschluß an eine externe Kühlquelle für das Kühlmittel möglich. Durch die Kühlung kann noch einmal eine Erhöhung der Ausgangsleistung um 50 bis 300% erzielt werden.

Besonders vorteilhaft ist es, die LED und/oder das aktive Lasermaterial direkt (oder mit einem hauchdünnen Schutzfilm versehen) in einem Kühlfluid, z.B. Wasser anzuordnen. Auf diese Weise wird durch die direkte Wärmeankopplung eine äußerst effektive Wärmeableitung gewährleistet. Einen weiteren Vorteil erzielt man, wenn man sowohl die LED als auch das Lasermaterial direkt in dem Kühlfluid anordnet, und ein Kühlfluid mit einem Brechungsindex zwischen dem der LED und des Lasermaterials verwendet wird. Auf diese Weise wird die Lichtausbeute aus der LED verbessert, da bei der LED die Totalreflexion an der Innenwand reduziert wird, und damit die thermischen Verluste innerhalb der LED reduziert werden.

Somit wird trotz des geringeren Wirkungsgrades und der - verglichen mit der Laserdiode - höheren Breitbandigkeit der emittierten Strahlung ein sehr gutes Ergebnis vor allem beim gepulsten Betrieb erreicht. Hierbei wird der wesentliche Vorteil erzielt, daß die Lebensdauer der Leuchtdiode sowohl im kontinuierlichen wie auch im gepulsten Betrieb in der Regel um den Faktor 5 bis 10 höher liegt als bei den für die Laseranwendung adaptierten Laserdioden. Es ist somit bei Laservorrichtungen unter Verwendung von Leuchtdioden eine Lebensdauer von beispielsweise 100.000 Stunden zu erwarten.

Dies ist in jedem Fall dann erreichbar, wenn die Leuchtdiode im zeitlichen Mittelwert ein gutes Stück unterhalb des zulässigen maximalen Stroms betrieben wird.

Vorteilhaft sind z.B. GaAs-, GaAs:Si- oder GaAlAs-Dioden mit einem Spektrum zwischen 800 und 950 nm. Diese haben einen höheren Wirkungsgrad verglichen mit im sichtbaren Bereich emittierenden LEDs.

Eine andere Möglichkeit der effektiven Nutzung einer LED für einen Hochleistungslaser besteht darin, die LED kontinuierlich im CW-Modus (continuous wave) zu betreiben, und im optischen Resonator einen optischen Verschluß, z.B. einen Q-Switch oder mechanischen Shutter anzuordnen, der für die Abgabe eines Impulses nur äußerst kurzzeitig geöffnet wird. Der Betriebszyklus (Öffnungszeit/Verschlußzeit) des optischen Verschlusses liegt unter 50%, vorzugsweise zwischen 1/100 und 1/10⁶. Auf diese Weise können LEDs, die sonst nur für Kleinstlaser Verwendung finden, auch für Hochleistungslaser zur Materialbearbeitung eingesetzt werden. Durch die kurze Offnungszeit des optischen Verschlusses wird im laseraktiven Material die Energie gespeichert, die in der Öffnungszeit des optischen Verschlusses als sehr starker Impuls innerhalb einer sehr kurzen Zeit (10 ns bis 300 ns) abgegeben wird. Dies entspricht somit einer optischen Pulsüberhöhung, während die o.g. kurze Ansteuerung der LED selbst eine elektrische Pulsüberhöhung darstellt.

Bisherige Lasersysteme benötigen für den cw-Betrieb sowie für den Pulsbetrieb zwei grundsätzlich unterschiedliche Anordnungen, wie z.B. unterschiedliche Pumplampen und Netzteile. Der Impulsbetrieb mit herkömmlichen Lampen ist aufgrund der Lampenträgheit auf maximale Frequenzen von ca. 1,5 kHz begrenzt. Bei LED-gepumpten Hochleistungslasern ist mit ein- und derselben LED sowie einem geeigneten Netzteil ein fließender Übergang von cw- zu Impulsbetrieb mit Frequenzen bis in den MHz-Bereich möglich. Dies könnte im cw-Betrieb für eine Pulsbreitenmodulation der Laserleistung genutzt werden. Die von der LED emittierte Leistung kann während des Impulses durch überlagerte Pulsbreitenmodulation gesteuert oder geregelt werden.

Die Erfindung wird nachfolgend beispielsweise anhand der schematischen Zeichnung beschrieben. In dieser zeigen:
- Fig. 1: eine perspektivische Explosionsdarstellung eines Lasers mit zylindrischer Anordnung des Lasergenerators, und
- Fig. 2: eine perspektivische Explosionsdarstellung eines Lasers mit axialer Einspeisung der Lichtenergie in das Lasermaterial.

Fig. 1 zeigt einen Hochleistungslaser 10 umfassend ein Gehäuse 12, in dem ein zylindrischer Lasergenerator, bestehend aus einer hohlzylindrischen Pumpquelle 14, deren Innenwand großflächig, vorzugsweise über die gesamte Innenfläche, mit einem LED-Array 16, bestehend aus vielen flächig nebeneinander angeordneten LEDs, bedeckt ist und aus einem aktiven Lasermaterial 18 in Form eines Zylinders, der konzentrisch in der hohlzylindirschen Pumpquelle angeordnet ist. Der zylindrische Lasergenerator 14,18 ist in dem Gehäuse 12 angeordnet, in dem ein Kühlfluidkreislauf vorgesehen ist, so daß sowohl der Außenmantel der Pumpquelle 14 als auch der Zwischenraum zwischen LED-Array 16 und Lasermaterial 18 direkt von Kühlfluid umspült sind. Das Kühlfluid hat einen Brechungsindex, der zwischen dem Brechungsindex der LED und des Lasermaterials liegt, um somit eine Indexanpassung zu erzielen, was die Strahlungsausbeute verbessert. Die Strömung der Kühlflüssigkeit wird durch die Pfeile 20, 22, 24, 26 dargestellt. Die Kühlung kann z.B. in Form eines Peltierelements integriert in dem Gehäuse ausgebildet sein.

Der Strahlengang des Lasers ist mit der strichpunktierten Linie 28 bezeichnet. Er führt vorderseitig gegen einen teilreflektierenden Spiegel 30, der Strahlung erst oberhalb einer bestimmten Intensität aus dem Laser 10 heraus passieren läßt. Rückwärtig sind in dem Strahl 28 ein hochreflektierender Spiegel 32 und ein optischer Schalter 34 angeordnet. Der optische Schalter kann ein akusto-optischer Q-Switch sein. Der Resonator wird zwischen den beiden Spiegeln 30,32 gebildet. Das LED-Array 16 der Pumpquelle 14 als auch der optische Schalter sind über elektrische Kabel 38,39 mit einer Steuerung 36 verbunden, die auch das Netzteil der Vorrichtung enthält.

Der Laser funktioniert wie folgt. Die Steuerung 36 ist in der Lage, das LED-Array 16 entweder im cw-Betrieb mit der zulässigen maximalen Dauerleistung zu versorgen oder im Pulsbetrieb mit einer Leistung, die ein Vielfaches über der maximalen Dauerleistung der LEDs 16 liegt. Als Folge davon wird das Lasermaterial 18 gepumpt, und sofern der optische Schalter 34 geöffnet ist, tritt ein Strahl entweder kontinuierlich oder entsprechend der angesteuerten Impulsdauer durch den teilreflektierenden Spiegel 30 aus.

Die Intensität kann abermals erhöht werden, wenn der optische Schalter geschlossen bleibt und nur für einen Bruchteil der Anregungszeit der Lasermaterials öffnet. Wenn beispielsweise ein LED-Array für 1 W Leistung über 1 ms mit 1kW angesteuert wird, der optische Schalter aber nur für 10 µs geöffnet wird, erhält man sowohl eine elektrische als auch eine optische Pulsüberhöhung , die die erzielten Leistungen weit über Werte ansteigen läßt, die im kontinuierlichen Dauerbetrieb erzielbar sind. Dieser Effekt läßt sich bereits allein durch eine optische oder eine elektrische Pulsüberhöhung (impulsartige Ansteuerung der LEDs 16 durch die Steuerung 36 mit einem Vielfachen der maximalen Dauerleistung), die mit einer starken Ausgangsleistungssteigerung verbunden ist, erzielen. Durch die Tatsache, daß das LED-Array direkt im Kühlfluidfluß angeordnet ist, läßt sich die Grundausbeute abermals erhöhen, insbesondere wenn man ein indexangepasstes Fluid verwendet.

Somit erreicht man mit dieser Anordnung mit LEDs Ausgangsleistungen, die ansonsten nur mit herkömmlichen Hochleistungspumplampen erzielbar waren. Die Ausgangsleistungen gehen bis in den kW-Bereich und sind für die Lasermaterialbearbeitung geeignet.

Fig. 2 zeigt eine andere Anordnung bei der zu Fig. 1 identische oder funktionsgleiche Teile mit den selben Bezugszeichen bezeichnet sind. Der in Fig. 2 gezeigte Laser 40 unterscheidet sich vom Laser 10 aus Fig. 1 in der Anordnung des Lasergenerators 14,18, der hier durch eine plattenförmige Pumpquelle 42 gebildet ist, die quer zur Strahlrichtung 28 angeordnet ist. Auf der dem Lasermaterial 18 zugewandten Seite der Platte 42 ist ein vollflächiges LED-Array vorgesehen. Die dort austretende Strahlung wird über eine Fokussieroptik 43 auf das zylinderförmige Lasermaterial 18 gebündelt, d.h. axial in das Lasermaterial 18 eingespeist. Der optische Schalter ist zwischen teilreflektierendem Spiegel 30 (=Resonatorausang) und dem Lasermaterial angeordnet, um das Pumpen des Lasermaterials 18 bei geschlossenem Schalter 34 nicht zu unterbinden. Der Kühlmittelfluß 20, 22, 24, 26 berührt direkt den Außenmantel des Lasermaterials 18, ist jedoch um den axialen Bereich zwischen Lasermaterial 18 und LED-Array 16 über den Kühlweg 22 herum geleitet, um die Resonatorfunktion nicht zu beeinträchtigen. An der Rückseite der Pumpquelle 42 ist der Kühlmittelfluß entlang der Strecke 24 entlang geführt und bewirkt so eine direkte wie auch eine indirekte (26) Kühlung der LEDs 16. Die Komponenten des Lasergenerators sind in dem Gehäuse 12 angeordnet. Die Funktion des Lasers 40 aus Fig. 2 ist mit der Funktion des Lasers aus Fig. 1 identisch.

## Patentansprüche

1. Hochleistungslaser für hohe Leistungen > 1 W bis in den kW-Bereich mit einer Pumpquelle und einem aktiven Lasermaterial, dadurch gekennzeichnet, daß die Pumpquelle des Lasers durch mindestens eine LED gebildet ist, und
daß für einen Impulsbetrieb der Leuchtdiode eine Steuerung vorgesehen ist, die während des Betriebszyklus der LED zum Zuführen eines Vielfachen des maximalen Dauernennstroms der LED ausgebildet ist und/oder im optischen Resonator ein optischer Schalter angeordnet ist und eine Steuerung den optischen Schalter zur Abgabe eines Laserimpulses während eines Betriebszyklus < 50% öffnet.

2. Hochleistungslaser nach Anspruch 1,
dadurch gekennzeichnet,
daß der optische Schalter durch einen Q-Switch gebildet ist, dessen Betriebszyklus < 10% des Betriebszyklus der Pumpquelle beträgt.

3. Laser nach einem der vorhergehenden Ansprüche,
dadurch gekennzeichnet, daß eine schmalbandig und/oder oberflächenemittierende Leuchtdiode vorgesehen ist.

4. Laser nach einem der vorhergehenden Ansprüche,
dadurch gekennzeichnet, daß die Leuchtdiode und/oder das Lasermaterial direkt oder mit einer Schutzschicht versehen direkt in einem Kühlmittelfluid angeordnet ist/sind.

5. Verwendung wenigstens einer mit Pulsüberhöhung betriebenen Leuchtdiode als Pumpquelle für einen Hochleistungslaser für Leistungen >1W.

6. Verfahren zum Betreiben eines Hochleistungslasers mit Leistungen >1 W bis in den kW-Bereich, bei dem die Pumpquelle durch eine Leuchtdiode gebildet ist, und die Leuchtdiode mit Pulsüberhöhung gepulst in einem Betriebszyklus kleiner als 50% und einer Pulsdauer kleiner als 20 ms betrieben wird, wobei die Pulsüberhöhung ein Vielfaches der thermisch zulässigen maximalen Dauerleistung der LED beträgt.

7. Verfahren nach Anspruch 6,
dadurch gekennzeichnet,
daß der zeitliche Intensitätsverlauf des Impulses durch eine dem Impuls überlagerte Pulsbreitenmodulation gesteuert oder geregelt wird.

8. Verfahren zum Betreiben eines Hochleistungslasers mit Leistungen >1 W bis in den kW-Bereich, bei dem die Pumpquelle durch eine Leuchtdiode gebildet ist, und die Leuchtdiode kontinuierlich betrieben wird, und in dem optischen Resonator des Lasers ein optischer Verschluß angeordnet wird, der in einem Betriebszyklus kleiner als 50% und einer Pulsdauer kleiner als 20 ms betrieben wird.

9. Verfahren nach einem der Ansprüche 1 bis 8,
dadurch gekennzeichnet, daß die Leuchtdiode und das Lasermaterial in direktem Kontakt mit einem Kühlfluid gekühlt werden, wobei ein Kühlfluid mit einem Brechungsindex zwischen dem Brechungsindex der LED und dem Brechungsindex des Lasermaterial verwendet wird.
